# EUROPÄISCHE PATENTSCHRIFT

(11) **EP 1 966 016 B1**
(45) Veröffentlichungstag und Bekanntmachung des Hinweises auf die Patenterteilung: **27.07.2011**
(21) Anmeldenummer: 06818487.8
(22) Anmeldetag: 11.11.2006
(51) Int. Cl.: B60T 8/88, B60T 7/10, B60T 15/14, B60T 17/22, B60T 7/08, B60T 13/66, B60T 13/36, B60T 13/38

(54) **TASTER ZUM BETÄTIGEN EINER ELEKTRO-PNEUMATISCHEN HANDBREMSE (EPH)**
PUSHBUTTON FOR ACTUATING AN ELECTROPNEUMATIC PARKING BRAKE (EPH)
BOUTON D'ACTIONNEMENT D'UN FREIN A MAIN ELECTROPNEUMATIQUE (EPH)

(30) Priorität: 20.12.2005 DE 102005060810
(43) Veröffentlichungstag der Anmeldung: 10.09.2008
(73) Patentinhaber: WABCO GmbH, 30453 Hannover (DE)
(72) Erfinder: GRIMM, Matthias, 30457 Hannover (DE); OHLENDORF, Jens, 30453 Hannover (DE)
(74) Vertreter: Günther, Constantin
(86) Internationale Anmeldenummer: PCT/EP2006/010832
(87) Internationale Veröffentlichungsnummer: WO 2007/071299

(56) Entgegenhaltungen:
- EP-A- 1 504 975
- WO-A-99/26825
- WO-A-99/50112
- DE-A1- 4 112 665
- DE-A1- 10 333 966
- DE-A1- 19 857 393

## Beschreibung

Die Erfindung bezieht sich auf einen Taster, insbesondere zum Betätigen einer elektro-pneumatischen Handbremse (EPH) in Straßenfahrzeugen, gemäß dem Oberbegriff des Patentanspruchs 1.

Eine derartige elektro-pneumatische Handbremse bzw. Feststellbremse ist z. B. aus der DE 103 36 611 A1 bekannt und dient dazu, ein Fahrzeug, insbesondere ein Nutzfahrzeug mit pneumatischer Bremsanlage während eines längeren Stillstandes durch Entlüftung seiner Federspeicherbremszylinder sicher zu halten. Durch die Entlüftung der Federspeicher werden die Bremsen, meist der Hinterachse, eingelegt und ohne weitere Energiezufuhr gehalten. Das Fahrzeug kann dabei mit einer elektronisch ansteuerbaren Bremsanlage (EBS) oder auch mit einer konventionell über einen pneumatischen Steuerdruck ansteuerbaren Bremsanlage ausgerüstet sein.

Die bekannte druckmittelbetriebene Bremsanlage für ein Fahrzeug weist zur Betätigung der Feststellbremsfunktion einen elektrischen Feststellbrems-Signalgeber auf, welcher als Taster mit drei Stellungen (Neutral, Feststellbremse und Anhängerkontrollstellung) ausgebildet ist. Eine Erkennung von Fehlern, beispielsweise Kontaktfehlern oder Drahtbrüchen des Signalgebers, welche gemäss gesetzlicher Vorschriften gefordert wird, ist nur eingeschränkt möglich.

Aus der DE 198 38 886 A1 ist weiter eine elektrische Feststellbremse (EPB) bekannt, bei der eine Bremseinrichtung mit einem Bedienelement zur Feststellung eines Fahrzeugs betätigt werden kann. Bei Betätigung des Bedienelementes im Stand des Kraftfahrzeuges wird die elektrische Feststellbremsanlage alternierend gespannt und gelöst. Das Bedienelement ist als Taster mit zwei Stellungen und mit einer Statusanzeige ausgebildet. Ein Hinweis über eine Fehlerkontrolle des Bedienelementes ist in dieser Schrift nicht enthalten.

Aus der WO 00/29268 ist eine Vorrichtung und ein Verfahren zur Steuerung einer elektrischen betätigbaren Feststellbremse bekannt. Zu einer besonders sicheren Erkennung des Fahrerwunsches bezüglich der Feststellbremsbetätigung wird hier vorgeschlagen, die Eingabevorrichtung zur Aufnahme des Fahrerwunsches in seinen Einzelkomponenten redundant auszuführen und gleichzeitig mittels einer elektronischen Steuervorrichtung zu überwachen. Dazu werden innerhalb einer Auswerteeinheit der Steuervorrichtung mehrere Prozeduren zyklisch durchlaufen, die eine Erkennung eines Fehlers in der Eingabevorrichtung erlauben und darüber hinaus noch den Fahrerwunsch erkennen lassen. Damit kann auf auftretende Fehler angemessen reagiert werden und ein Fahrzeug mittels der Feststellbremse selbst bei nicht eindeutig erkennbaren Fahrerwunsch hilfsweise in einen sicheren Fahrzustand überführt werden. Die Fehlererkennung wird dabei durch Potentialmessungen an Widerständen, die in die Eingabevorrichtung eingebaut sind, ermöglicht. Ein Fehler wird durch eine Signaleinrichtung im Armaturenbrett angezeigt.

Die bekannte Eingabevorrichtung weist einen erheblichen Verkabelungsaufwand, nämlich acht Anschlussleitungen auf. Sie hat weiter einen komplexen Aufbau der verwendeten Schalter und Widerstände und ein komplexes Auswerteverfahren zur Erkennung eines Fehlers. Durch die hierzu nötigen Programmroutinen im auswertenden Mikrokontroller wird ein erheblicher Speicherbedarf benötigt.

Das Dokument DE 103 33 966 A1 , das den Oberbegriff des anspruchs 1 definiert, offenbart ein Verfahren zur Aktivierung des Steuergerätes einer automatisierten Parkbremse in einem Fahrzeug, enthaltend ein durch den Fahrer betätigbares Schaltelement zur Aktivierung und Deaktivierung der automatisierten Parkbremse.

Der Erfindung liegt die Aufgabe zugrunde, einen Taster mit angeschlossener Auswerte-Elektronik zum Betätigen einer elektro-pneumatischen Handbremse (EPH) anzugeben, wobei der Taster hardwaremässig vereinfacht ist und wobei eine besonders einfache Erkennung aller Schaltstellungen und möglicher Fehlerzustände realisiert ist.

Diese Aufgabe wird durch die im Patentanspruch 1 enthaltene Erfindung gelöst. Die Unteransprüche enthalten zweckmäßige Weiterbildungen.

Durch die einfache Auswertung der Potentiale der beiden Anschlussleitungen bzw. des Eingangswiderstandes des Tasters nach der Erfindung zwischen seinen Anschlusspunkten wird die Fehlererkennung im Vergleich zum Stand der Technik erheblich vereinfacht. Es müssen nicht mehr mittels Programmroutinen zyklische Abfragen von Potentialen mehrerer Widerstände durchgeführt werden. Statt dessen genügt eine einfache Potentialmessung der Verbindungsleitungen des Tasters.

Die Erfindung wird nachfolgend anhand von Ausführungsbeispielen unter Verwendung von Zeichnungen sowie unter Nennung weiterer Vorteile näher beschrieben.

Es zeigen
- Fig. 1: eine schematische Darstellung der Aussenan- sicht des erfindungsgemässen Tasters mit Verbindungsleitungen zur Auswerteelektronik (ECU).
- Fig. 2: eine schematische Darstellung des inneren Schaltungsaufbaus des Tasters mit ange- schlossenem Kabel zur ECU.
- Fig. 3: ein Diagramm mit einer Darstellung der mög- lichen korrekten sowie gestörten Ausgangs- potentiale des Tasters in seinen verschie- denen Schaltstellungen.
- Fig. 4: eine Darstellung der Schaltung nach der Fig. 2 mit zusätzlicher Wakeup-Schaltung.
- Fig. 5: eine vereinfachte Ausführung der Schaltung des Tasters.

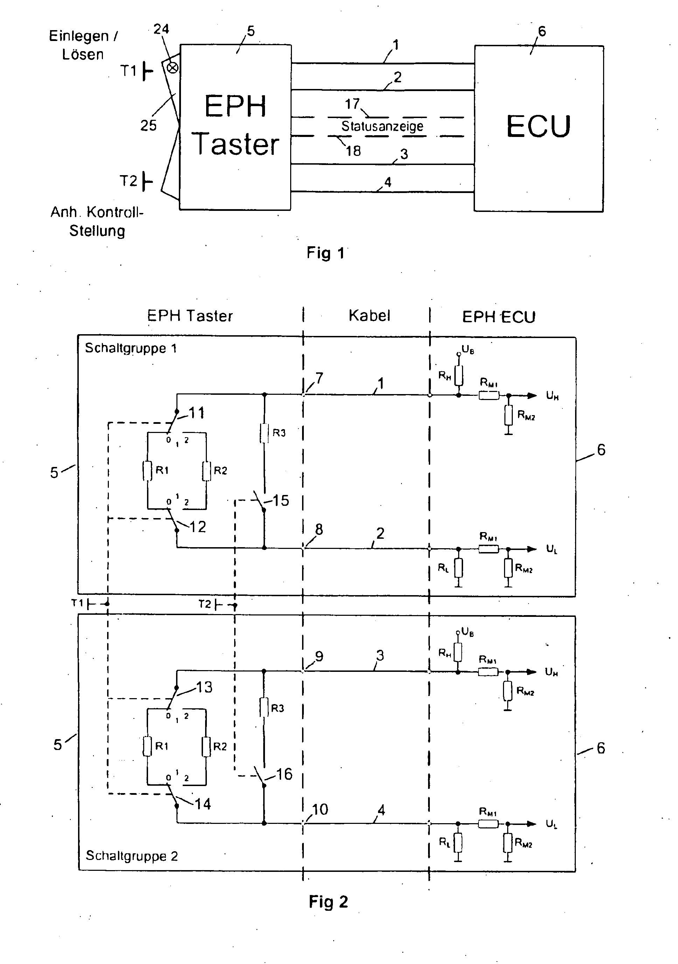

In der Fig. 1 ist schematisch das äußere Erscheinüngsbild eines Tasters (5), hier eines EPH-Tasters (5), sowie sein Anschluss an eine Auswerteelektronik (ECU) (6) dargestellt. Der Taster (5) ist in eine Aussparung des Armaturenbretts eines Nutzfahrzeugs eingesetzt (nicht dargestellt). Zum Betätigen dient eine Schaltwippe (25), welche von der gezeichneten Neutralstellung aus oben (Taste T1) sowie unten (Taste T2) betätigbar ist.

Der Taster (5) kann, wie im folgenden beschrieben, zum Betätigen einer druckluftbetriebenen Feststellbremse dienen. Er kann aber auch zum Betätigen von von andersartig betriebenen Feststellbremsen, wie z.B. hydraulischen Feststellbremsen verwendet werden.

Die Taste T1 dient zum wechselseitigen Einlegen und Lösen der elektro-pneumatischen Handbremse (EPH). Die Taste T2 dient zum Einlegen der sogenannten Anhängerkontrollstellung (siehe unten).

Eine Betätigung der Tasten T1, T2 durch den Fahrer wird über vier Leitungen (1) bis (4) an die ECU (6) übertragen. Zur Rückmeldung (Statusanzeige) der jeweiligen Stellung der elektro-pneumatischen Handbremse bzw. Feststellbremse (angezogen oder gelöst) dienen zwei weitere Leitungen (17, 18), welche von der ECU (6) zum EPH-Taster (5) zurückführen.

Von der ECU (6) führen Leitungen zu verschiedenen Magnetventilen, die zur Steuerung der Feststellbremse dienen (nicht dargestellt). Derartige Ventile sowie die dadurch realisierte Steuerung der Feststellbremse sind z. B. in der DE 103 36 611 A1 näher erläutert.

Der ECU (6) können auch Signale von Sensoren, insbesondere Drucksensoren, zugeführt werden (nicht dargestellt).

Zur Statusanzeige der EPH für den Fahrer kann eine im EPH-Taster angebrachte Signallampe (24) dienen. Es kann aber auch eine gesonderte, im Armaturenbrett angeordnete Signallampe verwendet werden (nicht dargestellt). Dies hat den Vorteil, dass die Status-Anzeige-Leitungen (17, 18) zwischen dem Taster (5) und der ECU (6) entfallen können. Die im Armaturenbrett angeordnete Signallampe ist vorteilhaft über einen Datenbus, z.B. einen CAN-Bus, an die zugehörige Elektronik, hier die ECU (6), angeschlossen.

Die Fig. 2 zeigt den inneren Aufbau bzw. die Schaltung des EPH-Tasters (5). Dieser besteht aus zwei parallelen, identisch aufgebauten Schaltgruppen 1 und 2. Durch diese Redundanz ist es für die ECU möglich, auch bei Störungen in einer Schaltgruppe aus den Signalen der intakten Schaltgruppe noch den Fahrerwunsch zu erkennen.

Der Einfachheit halber wird nachfolgend nur die Schaltgruppe 1 erläutert.

Zur Schaltgruppe 1 gehören zwei parallel liegende Widerstände R1 und R2, welche mittels zweier Umschalter (11) und (12) mit den Anschlusspunkten (7, 8) des EPH-Tasters (5) verbindbar sind. Hierzu sind die Basisanschlüsse der Umschalter (11) und (12) an die Anschlusspunkte (7) und (8) gelegt. Die Schaltpole der Umschalter (11) und (12) liegen im Ruhezustand des Tasters (5) am ersten Widerstand R1 und im betätigten Zustand des Tasters (5) am zweiten Widerstand R2. Die Umschalter (11) und (12) sind gemeinsam mit einer ersten Taste T1 betätigbar.

Weiter liegt parallel zu den Widerständen R1 und R2 ein weiterer Widerstand R3 in Reihe mit einem weiteren Schalter (15). Bei Betätigung des Schalters (15) durch eine zweite Taste T2 überbrückt der weitere Widerstand R3 die Anschlusspunkte (7, 8). Hierdurch wird eine sogenannte Anhängerkontrollstellung (siehe unten) eingelegt. Infolge der starren Kopplung der Tasten T1 und T2 durch die Schaltwippe (25) (siehe Fig. 1) lassen sich nur entweder die Umschalter (11, 12) oder der weitere Schalter (15) betätigen.

Die genannten Widerstände haben typischerweise einen Wert von R1= 40 kOhm, R2= 4 kOhm, R3= 20 kOhm.

Die weitere Schaltgruppe 2 des Tasters (5) dient wie oben erwähnt zur Erhöhung der Sicherheit durch Redundanz und enthält entsprechende Umschalter (13, 14) sowie einen weiteren Schalter (16). Sie hat die Anschlußpunkte (9, 10) und ist über Anschlußleitungen (3, 4) mit der ECU (6) verbunden.

An den EPH-Taster (5) mit seinen Schaltgruppen 1 und 2 ist ein gemeinsames mehradriges Kabel mit Anschlussleitungen (1, 2) bzw. (3, 4) angeschlossen. Dieses führt zur Auswerteelektronik (6) (EPH-ECU), welche an beliebiger Stelle im Fahrzeug angeordnet sei kann. Innerhalb der ECU (6) sind die genannten Kabel (1) bzw. (3) mittels eines Widerstandes RH an die Batteriespannung UB gelegt. Die unteren Anschlussleitungen (2) bzw. (4) sind mit einem weiteren Widerstand RL an Masse gelegt.

Durch diese Schaltung wird ein Spannungsteiler gebildet, welcher aus dem Widerstand RH, dem je nach Schalterbetätigung unterschiedlichen Innenwiderstand des EPH-Tasters, sowie dem Widerstand RL besteht, und durch die Batteriespannung UB bestromt wird.

Mittels Spannungs-Herunterteilung durch weitere Widerstände RM1 und RM2 werden Ausgangspotentiale UH und UL gebildet, die dem gängigen Eingangsspannungsbereich von Mikrocontrollern entsprechen. Diese Spannungen werden, wie weiter unten näher beschrieben, durch die Auswerteelektronik (6) der EPH analog abgefühlt, auf Fehler untersucht und zur Steuerung der elektro-pneumatischen Handbremse bzw. der Feststellbremse des betroffenen Fahrzeugs verwendet.

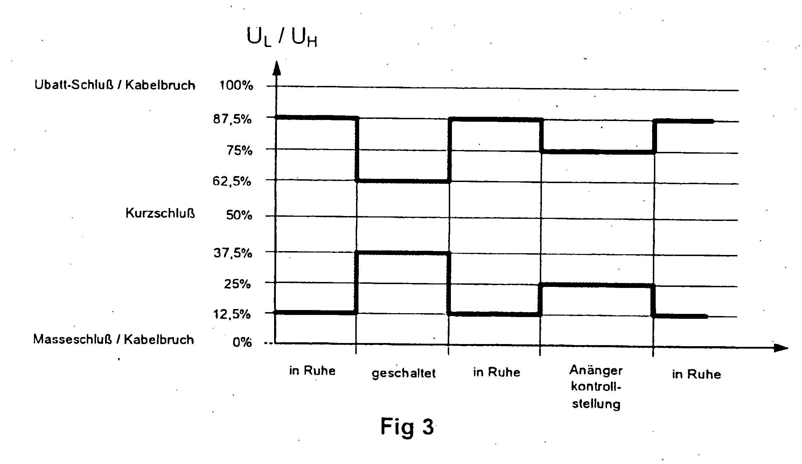

In der Fig. 3 sind einige mögliche Spannungspotentiale von UH bzw. UL in normierter Form von Null bis 100 Prozent dargestellt, die sich im ungestörten oder im gestörten Betrieb des Tasters (5) einstellen können. In der unteren Hälfte des Diagramms ist UL, in der oberen Hälfte UH dargestellt.

Wie man aus dem Diagramm erkennt, ist im Ruhezustand des EPH-Tasters UL gleich 12,5 Prozent und UH gleich 87,5 Prozent.

Im geschalteten Zustand des EPH-Tasters, also bei betätigter Taste T1, beträgt UL 37,5 Prozent und UH 62,5 Prozent. Dies kommt daher, weil der Wert des zweiten Widerstands R2 nur etwa ein Zehntel des Wertes des ersten Widerstandes R1 beträgt.

Für die Anhängerkontrollstellung, also bei betätigter Taste T2, beträgt UL gleich 25 Prozent und UH gleich 75 Prozent.

Bei unterschiedlichen Fehlerfällen des Tasters oder der Anschlußleitungen stellen sich für UL und UH verschiedene Potentiale ein. Diese werden durch die ECU analog gemessen und ausgewertet. Durch eine entsprechend programmierte Logik kann hierdurch der jeweilige Fehler identifiziert und angezeigt werden.

Im Diagramm von Fig. 3 sind drei spezifische Fehler eingetragen.

Bei einem Kurzschluss im Kabel, d. h. bei einer Verbindung zwischen den Anschlussleitungen (1, 2) bzw. (3, 4) ergibt sich ein gemeinsames Potential von 50 Prozent für UL und UH.

Bei einem Kabelbruch in den Anschlussleitungen (1) oder (2) im gezeichneten unbetätigten Zustand des EPH-Tasters ergibt sich für UL gleich Null und für UH gleich 100 Prozent.

Bei einem Batterieschluss einer der beiden Anschlussleitungen (1) oder (2) ergibt sich für die gestörte Leitung ein Potential von 100 Prozent.

Bei einem Masseschluss einer der beiden Anschlussleitungen (1) oder (2) ergibt sich für die gestörte Leitung ein Potentiale von Null Prozent.

Andere, kombinierte Fehler liegen mit ihren Potentialen innerhalb des Bereiches zwischen Null und 100 Prozent und können damit durch die ECU (6) unterschieden werden.

Fals die ECU (6) einen Fehler erkennt, wird dieser durch eine gesonderte Fehleranzeige (nicht dargestellt) dem Fahrer signalisiert und der Funktionsumfang der EPH entsprechend so eingeschränkt, dass ein sicherer Zustand für das Fahrzeug erreicht wird.

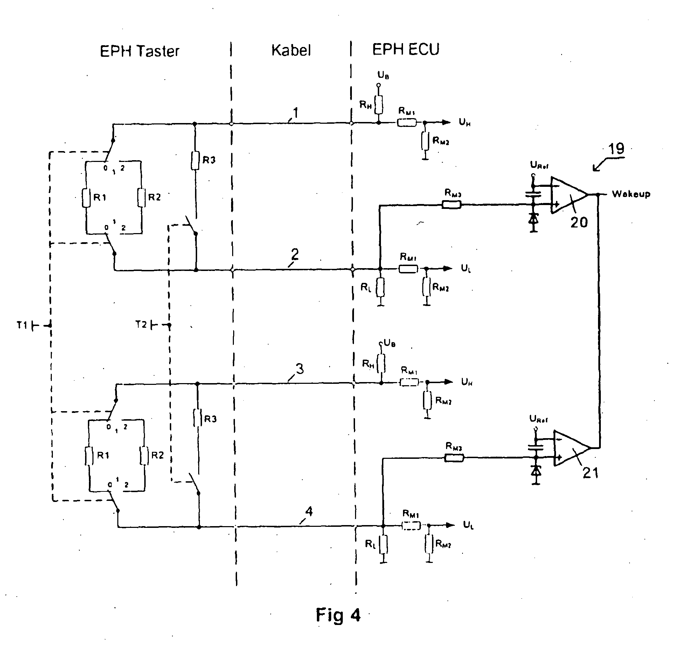

Die Fig. 4 zeigt die gleiche Schaltung wie die Fig. 2, jedoch mit einer zusätzlichen Wakeup-Vorrichtung für die ECU. Diese besteht aus zwei Operationsverstärkern (20, 21), deren Steueranschlüsse über weitere Widerstände RM3 jeweils an die Verbindungsleitungen (2) bzw. (4) angeschlossen sind.

Bei Betätigung einer der Tasten T1 oder T2 wird dadurch der jeweilige Steueranschluss der Operationsverstärker (20, 21) mit Spannung beaufschlagt und so am Ausgang ein Wakeup-Signal erzeugt.

Mit dieser Schaltungserweiterung ergibt sich der Vorteil, dass die ECU nicht ständig unter Betriebsspannung stehen muss, sondern nur dann, wenn die EPH-Funktion oder die Anhängerkontrollstellung eingelegt wird.

Die erwähnte Anhängerkontrollstellung erlaubt es dem Fahrer, bei einem am Hang abgestellten Zugfahrzeug mit Anhänger, wobei beide Teile des Fahrzeugzuges per Feststellbremse eingebremst sind, versuchsweise die Bremsen des Anhängers zu lösen. Hierdurch kann der Fahrer erkennen, ob in diesem Fall die Bremsen des Zugfahrzeuges allein ausreichen, um den Fahrzeugzug im Stillstand zu halten. Falls dies nicht der Fall sein sollte, kann der Fahrer beispielsweise durch Unterlegen eines Bremskeils den Zug weiter sichern.

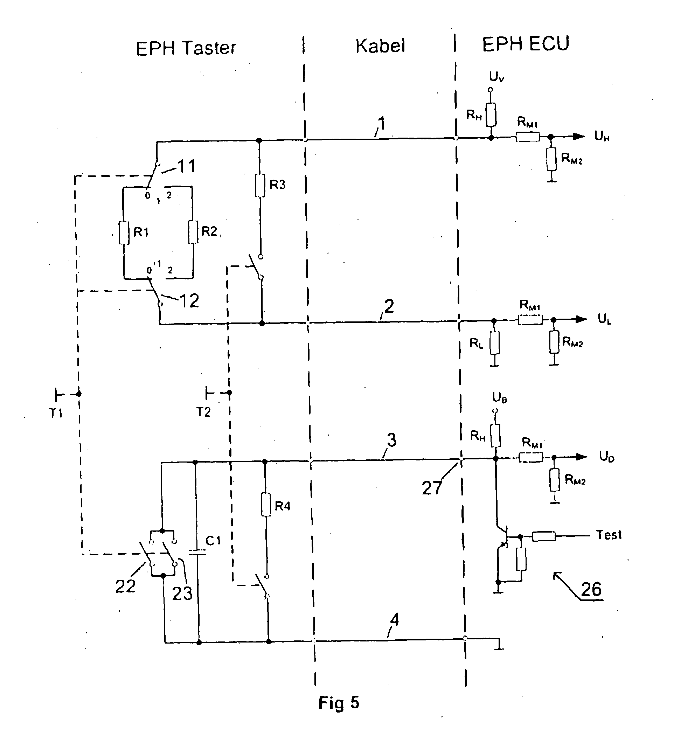

In der Fig. 5 ist eine vereinfachte Ausführung der Schaltgruppe 2 des EPH-Tasters (5) dargestellt, bei dem die Schaltgruppe 2 ohne die Widerstände R1 und R2 auskommt. Statt dessen sind zwei parallele Schalter (22, 23) vorgesehen, die bei Betätigung durch die Taste T1 geschlossen werden und dadurch die Anschlußleitungen (3, 4) kurzschliessen. Die Anschlussleitung (4) ist innerhalb der ECU auf Masse gelegt. Die angeschlossene EPH-ECU erkennt den betätigten Zustand der Schalter (22, 23) daran, dass die Eingangsspannung UD auf Null geht.

Diese Variante hat den Vorteil, dass kein Ruhestrom (wie in der Schaltgruppe 1 durch den Widerstand R1) fließt, und dass die Widerstände R1 und R2 eingespart werden.

Mehraufwand entsteht bei dieser Variante allerdings dadurch, dass zur Vermeidung von Kontaktabnutzung den Schaltern (22, 23) ein Kondensator C1 parallel geschaltet sein muß. Der Kondensator C1 dient weiter dazu, sich beim Schliessen der Schalter (22, 23) über diese zu entladen und hierdurch eine Kontaktreinigung zu erzielen.

Weiter ist es nötig, wegen des fehlenden Ruhestroms in den Anschlussleitungen (3, 4) mittel einer Testschaltung (26) diese sporadisch zu prüfen, indem der Eingangsanschluß (27) der Anschlussleitung (3) auf Nullpotential gezogen wird. Bei intakten Leitungen (3, 4) ergibt sich dabei durch die Entladung des Kondensators C1 über die inneren Widerstände der Anschlussleitungen (3, 4) sowie der Testschaltung (26) ein charakteristischer abfallender Spannungsverlauf der Eingangsspannung UD, welcher von der ECU ausgewertet wird.

Im übrigen entspricht die Schaltung nach der Fig. 5 der Schaltung nach der Fig. 2.

## Patentansprüche

1. Taster zur Betätigung einer elektro-pneumatischen Handbremse (EPH) in Straßenfahrzeugen, mit einer über Anschlussleitungen (1, 2) bzw. (3, 4) angeschlossenen Auswerteelektronik (ECU) (6), welche zur Auswertung des Tasters sowie zur Ansteuerung der EPH dient, wobei zur Schaltstellungs- und/oder Fehlererkennung des Tasters (5) mittels der ECU (6) die Potentiale der Anschlussleitungen (1, 2) bzw. (3, 4) des Tasters (5) ausgewertet werden, **dadurch gekennzeichnet, dass** zwei parallele, identische, mechanisch gekoppelte Schaltgruppen (Schaltgruppe 1 und Schaltgruppe 2) vorgesehen sind, die zum abwechselnden Einlegen und Lösen der Handbremse (EPH) mittels einer ersten Taste (T1) gemeinsam betätigbar sind, wobei die beiden Schaltgruppen 1 und 2 je zwei Umschalter (11, 12; 13, 14) enthalten, welche mit ihrer Basis an die Anschlussleitungen (1, 2; 3, 4)) angeschlossen sind, und mit ihren Schaltpolen im Ruhezustand des Tasters (5) mit je einem ersten Widerstand R1 Kontakt haben.

2. Taster nach Anspruch 1, **dadurch gekennzeichnet, dass** die Schaltpole der Umschalter (11, 12; 13, 14) im betätigten Zustand mit einem zweiten, dem Widerstand R1 parallelen Widerstand R2 Kontakt haben, wobei der Wert des zweiten Widerstands R2 etwa 1/10 des Werts des ersten Widerstands R1 beträgt.

3. Taster nach einem oder mehreren der Ansprüche 1 bis 2, **dadurch gekennzeichnet, dass** die beiden Schaltgruppen 1 und 2 je einen weiteren Widerstand R3 enthalten, der bei Betätigung von in Reihe liegenden weiteren Schaltern (15, 16) die Anschlusspunkte (7, 8) bzw. (9, 10) des Tasters (5) überbrückt.

4. Taster nach Anspruch 3, **dadurch gekennzeichnet, dass** die beiden weiteren Schalter (15, 16) mechanisch gekoppelt sind und mittels einer zweiten Taste T2 betätigbar sind, welche zum Einlegen einer Anhänger-Kontroll-Stellung dient.

5. Taster nach einem oder mehreren der Ansprüche 1 bis 4, **dadurch gekennzeichnet, dass** die Tasten T1 und T2 in Form einer Schaltwippe (25) mechanisch miteinander gekoppelt sind.

6. Taster nach einem oder mehreren der Ansprüche 1 bis 5, **dadurch gekennzeichnet, dass** die Anschlussleitungen (1) bis (4) des Tasters (5) innerhalb der Elektronik (ECU) (6) über je einen Widerstand RH an die Bordspannung UB bzw. über je einen weiteren Widerstand RL an Masse angeschlossen sind.

7. Taster nach Anspruch 6, **dadurch gekennzeichnet, dass** die Potentiale (UH, UL) der Anschlussleitungen (1, 2, 3, 4) nach Herunterteilung durch weitere Widerstände RM1, RM2 durch die Elektronik (ECU) (6) analog gemessen und ausgewertet werden.

8. Taster nach Anspruch 1 bis 7, **dadurch gekennzeichnet, dass** für eine Fahrer-Statusanzeige der elektro-pneumatischen Handbremse zwei weitere Leitungen (17, 18) von der ECU (6) zum Taster (5) zurückgeführt sind.

9. Taster nach Anspruch 8, **dadurch gekennzeichnet, dass** die Statusanzeige durch eine im Taster (5) eingebaute Signallampe (24) realisiert ist.

10. Taster nach einem oder mehreren der Ansprüche 1 bis 9, **dadurch gekennzeichnet, dass** eine Wakeup-Vorrichtung (19) für die Elektronik (ECU) (6) vorgesehen ist, die bei Betätigung des Tasters (5) ein Wecksignal generiert.

11. Taster nach Anspruch 10, **dadurch gekennzeichnet, dass** die Wakeup-Vorrichtung (19) aus zwei Operationsverstärkern (20, 21) besteht, deren Signaleingänge über je einen weiteren Widerstand RM3 an die Anschlussleitungen (2, 4) angeschlossen sind.

12. Taster nach einem oder mehreren der Ansprüche 1 bis 11, **dadurch gekennzeichnet, dass** anstelle einer oder beider der Schaltgruppen 1, 2 eine vereinfachte Schaltgruppe ohne die Widerstände R1, R2 vorgesehen ist, wobei die Anschlussleitungen 3, 4 der vereinfachten Schaltgruppe bei Betätigung der Taste T1 mittels zweier parallel liegender Schalter (22, 23) verbindbar sind.

13. Taster nach Anspruch 12, **dadurch gekennzeichnet, dass** den Schaltern (22, 23) ein Kondensator C1 parallel geschaltet ist.

14. Taster nach Anspruch 12 bis 13, **dadurch gekennzeichnet, dass** der Eingangsanschluß (27) der Anschlussleitung (3) mittels einer Testschaltung (26) auf Nullpotential gezogen werden kann.

## Claims

1. Pushbutton for actuating an electropneumatic parking brake (EPH) in road vehicles, having evaluation electronics (ECU) (6) which are connected via connecting lines (1, 2) and (3, 4), respectively, and which serve to evaluate the pushbutton and to activate the EPH, wherein the potentials of the connecting lines (1, 2) and (3, 4), respectively, of the pushbutton (5) are evaluated by means of the ECU (6) in order to detect the switched position and/or detect faults of the pushbutton (5), **characterized in that** two parallel, identical, mechanically coupled switching groups (switching group 1 and switching group 2) are provided and can be activated together by means of a first pushbutton key (T1) in order to alternately apply and release the parking brake (EPH), wherein the two switching groups 1 and 2 each contain two changeover switches (11, 12; 13, 14) which are connected by their base to the connecting lines (1, 2; 3, 4) and are in contact by their switching poles, in the state of rest of the pushbutton (5), to one first resistor R1 each.

2. Pushbutton according to Claim 1, **characterized in that** the switching poles of the changeover switches (11, 12; 13, 14) are in contact, in the activated state, with a second resistor R2 which is parallel to the resistor R1, wherein the value of the second resistor R2 is approximately 1/10 of the value of the first resistor R1.

3. Pushbutton according to one or more of Claims 1 to 2, **characterized in that** the two switching groups 1 and 2 each contain a further resistor R3 which, when further switches (15, 16) which are in series are activated, bridges the connecting points (7, 8) and (9, 10), respectively, of the pushbutton (5).

4. Pushbutton according to Claim 3, **characterized in that** the two further switches (15, 16) are mechanically coupled and can be activated by means of a second pushbutton key T2 which serves to apply a trailer control position.

5. Pushbutton according to one or more of Claims 1 to 4, **characterized in that** the pushbutton keys T1 and T2 are mechanically coupled to one another in the form of a switching rocker (25).

6. Pushbutton according to one or more of Claims 1 to 5, **characterized in that** the connecting lines (1) to (4) of the pushbutton (5) are connected, within the electronics (ECU) (6), to the on-board power system voltage UB via one resistor RH in each case or to earth via a further resistor RL in each case.

7. Pushbutton according to Claim 6, **characterized in that** the potentials (UH, UL) of the connecting lines (1, 2, 3, 4) are measured in analogue fashion and evaluated by the electronics (ECU) (6) after having been divided down by further resistors RM1, RM2.

8. Pushbutton according to Claims 1 to 7, **characterized in that**, for a driver status display of the electropneumatic parking brake, two further lines (17, 18) are led back from the ECU (6) to the pushbutton (5).

9. Pushbutton according to Claim 8, **characterized in that** the status display is implemented by means of a signal lamp (24) which is installed in the pushbutton (5).

10. Pushbutton according to one or more of Claims 1 to 9, **characterized in that** a wakeup device (19) for the electronics (ECU) (6) is provided, which wakeup device (19) generates a wakeup signal when the pushbutton (5) is activated.

11. Pushbutton according to Claim 10, **characterized in that** the wakeup device (19) is composed of two operational amplifiers (20, 21), the signal inputs of which are each connected via a further resistor RM3 to the connecting lines (2, 4).

12. Pushbutton according to one or more of Claims 1 to 11, **characterized in that**, instead of one or both of the switching groups 1, 2 being provided, a simplified switching group without the resistors R1, R2 is provided, wherein the connecting lines 3, 4 of the simplified switching group can be connected by means of two parallel switches (22, 23) when the pushbutton key T1 is actuated.

13. Pushbutton according to Claim 12, **characterized in that** a capacitor C1 is connected in parallel with the switches (22, 23).

14. Pushbutton according to Claims 12 to 13, **characterized in that** the input terminal (27) of the connecting line (3) can be drawn to zero potential by means of a test circuit (26).

## Revendications

1. Bouton d'actionnement d'un frein à main électropneumatique (EPH) dans des véhicules routiers, avec une unité de commande électronique (ECU) (6) raccordée via des câbles de raccordement (1, 2) et/ou (3, 4) servant à analyser le bouton ainsi qu'à piloter l'EPH, les potentiels des câbles de raccordement (1, 2) et/ou (3, 4) du bouton (5) étant analysés pour détecter la position de commutation et/ou une panne du bouton (5) à l'aide de l'ECU (6), **caractérisé en ce que** deux groupes de commutation parallèles, identiques, couplés de façon mécanique (groupe de commutation 1 et groupe de commutation 2) sont prévus et peuvent être actionnés ensemble pour serrer et desserrer en alternance le frein à main (EPH) à l'aide d'une première touche (T1), les deux groupes de commutation 1 et 2 comportant respectivement deux inverseurs (11, 12 ; 13, 14) raccordés aux câbles de raccordement (1, 2 ; 3, 4) avec leur base et respectivement en contact avec une première résistance R1 avec leurs pôles de commutation à l'état de repos du bouton (5).

2. Bouton selon la revendication 1, **caractérisé en ce que** les pôles de commutation des inverseurs (11, 12 ; 13, 14) sont en contact, à l'état actionné, avec une deuxième résistance R2 parallèle à la résistance R1, la valeur de la deuxième résistance R2

3. Bouton selon l'une quelconque des revendications 1 à 2 ou plyusieurs d'entre elles, **caractérisé en ce que** les deux de groupe de commutation 1 et 2 comportent respectivement une résistance R3 supplémentaire qui court-circuite les points de raccordement (7, 8) et/ou (9,10) du bouton (5) en cas d'actionnement des autres commutateurs (15, 16) branchés en série.

4. Bouton selon la revendication 3, **caractérisé en ce que** les deux autres commutateurs (15, 16) sont couplés de façon mécanique et peuvent être actionnés à l'aide d'une deuxième touche T2 servant à activer une position de contrôle de remorque.

5. Bouton selon l'une quelconque des revendications 1 à 4 ou plusieurs d'entre elles, **caractérisé en ce que** les touches T1 et T2 sont couplées de façon mécanique l'une à l'autre sous la forme d'un levier de commutation (25).

6. Bouton selon l'une quelconque des revendications 1 à 5 ou plusieurs d'entre elles, **caractérisé en ce qu'**à l'intérieur de l'unité électronique (ECU) (6), les câbles de raccordement (1) à (4) du bouton (5) sont raccordés à la tension de bord UB par le biais d'une résistance RH respective et/ou à la masse par le biais d'une autre résistance RL respective.

7. Bouton selon la revendication 6, **caractérisé en ce que** les potentiels (UH, UL) des câbles de raccordement (1, 2, 3, 4) sont analysés et mesurés de façon alogique par l'unité électronique (ECU) (6) après subdivision à l'aide d'autres résistances RM1, RM2.

8. Bouton selon la revendication 1 à 7, **caractérisé en ce que** deux autres câbles (17, 18) sont ramenés de l'ECU (6) au bouton (5) pour afficher au conducteur l'état du frein à main électropneumatique.

9. Bouton selon la revendication 8, **caractérisé en ce que** l'affichage de l'état se fait par le biais d'une lampe de signalisation (24) encastrée dans le bouton (5).

10. Bouton selon l'une quelconque des revendications 1 à 9 ou plusieurs d'entre elles, **caractérisé en ce qu'**un dispositif de réveil (19) est prévu pour l'unité électronique (ECU) (6), celui-ci générant une sonnerie à l'actionnement du bouton (5).

11. Bouton selon la revendication 10, **caractérisé en ce que** le dispositif de réveil (19) se compose de deux amplificateurs opérationnels (20, 21) dont les entrées de signal sont respectivement raccordées aux câbles de raccordement (2, 4) par le biais d'une résistance supplémentaire RM3.

12. Bouton selon l'une quelconque des revendications 1 à 11 ou plusieurs d'entre elles, **caractérisé en ce qu'**il est prévu, à la place de l'un ou des deux groupes de commutation 1, 2, un groupe de commutation simplifié sans les résistances R1, R2, les câbles de raccordement 3, 4 du groupe de commutation simplifié pouvant être reliés à l'aide de deux commutateurs (22, 23) parallèles lors de l'actionnement de la touche T1.

13. Bouton selon la revendication 12, **caractérisé en ce qu'**un condensateur C1 est branché en parallèle des commutateurs (22, 23).

14. Bouton selon l'une quelconque des revendications 12 à 13, **caractérisé en ce que** le raccordement d'entrée (27) du câble de raccordement (3) peut être ramené à un potentiel nul à l'aide d'un circuit de test (26).
